# EUROPEAN PATENT APPLICATION

(11) **EP 4 556 219 A1**
(43) Date of publication of application: **21.05.2025**
(21) Application number: 23210802.7
(22) Date of filing: 20.11.2023
(51) Int. Cl.: B32B 17/10

(54) **IMPROVED ILLUMINABLE LAMINATION INTERLAYER AND GLAZING**

(71) Applicant: Kuraray Europe GmbH, 65795 Hattersheim (DE)
(72) Inventor: Keller, Uwe, 77210 Avon (FR); BIER, Felix, 76879 Ottersheim (DE)
(74) Representative: Janßen, Christian Oliver

(57) **Abstract**

Described is a lamination interlayer and laminate structure which enables the application of optically improved functional layers, structures or patterns, especially for transparent lighting and display applications.

## Description

Described is a lamination interlayer and laminate structure which enables the application of optically improved functional layers, structures or patterns, especially for transparent lighting and display applications.

Transparent surfaces, especially glass facades of buildings or automotive glazing are more and more subject to functionalization. The main fields of interest are transparent sun control, lighting and displaying of information. In the automotive market illumination of transparent glass surfaces is of particular interest, for example to create ambient lighting using the glass roofs of cars.

WO 2021/005162 A1 describes a glass laminate for illuminating an automotive sunroof using an interlayer film with a functional layer comprising light diffusing particles embedded between two polyvinyl butyral (PVB) containing films. Embedding the light diffusing particles between two PVB films was mainly chosen to ensure a good adhesion of the interlayer film to the glass surfaces.

However, it has now been surprisingly found that an arrangement of the different layers of the interlayer film wherein the light diffusing layer is in direct contact with one of the glass surfaces leads to a substantially improved outcoupling of light, especially when the light diffusing layer is located on one side of a thin PVB film while a low refractive index layer (LRI) is located on the other side of the thin PVB film.

Therefore, one objective of the present invention is to provide laminated glazing with improved characteristics like an improved light performance, improved thermal or UV stability, improved optical properties like an improved haze, transparency and/or transmissibility, and/or improved design features.

Accordingly, the present invention provides in a first aspect a laminated glazing comprising two sheets of glass (101,105) combined by means of a thermoplastic interlayer comprising:
- a polyvinyl acetal film A (102A) comprising plasticizer before lamination in an amount of from 0 to 20 % by weight,
- a low refractive index layer (104) having a refractive index of < 1.40 measured as described below,
- a light diffusing layer (103) in direct contact to one of the glass sheets (101,105),
- a polyvinyl acetal film B (102B) comprising plasticizer before lamination in an amount of from 15 to 50 % by weight, and
- optionally, at least one further polymer film C (102C).

One advantage of using a polyvinyl butyral (PVB) polymer interlayer film (102A) with reduced plasticizer content or no plasticizer is the possibility to generate a film with a particularly smooth surface and thus a better, homogeneous print image on the smooth side. Also, the polyvinyl butyral material used for film 102A is naturally very compatible with the standard PVB interlayers used in the glass industry. Furthermore, the low plasticizer and therefore stiff PVB film 102A can be printed on using new, more economical roll-to-roll processes such as flexographic printing. This is not possible with glass or soft PVB films.

### Brief description of the drawings

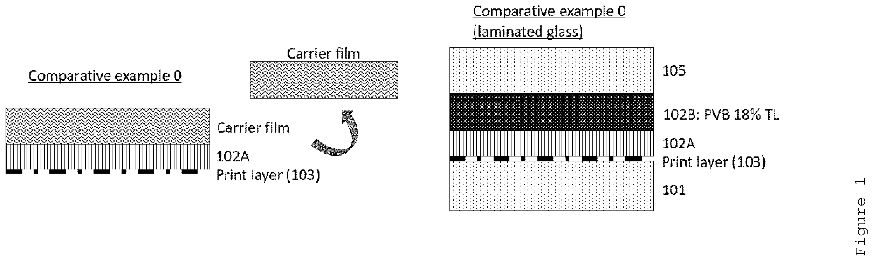

Figure 1 illustrates a set-up of the prior art as exemplified in comparative example 0.

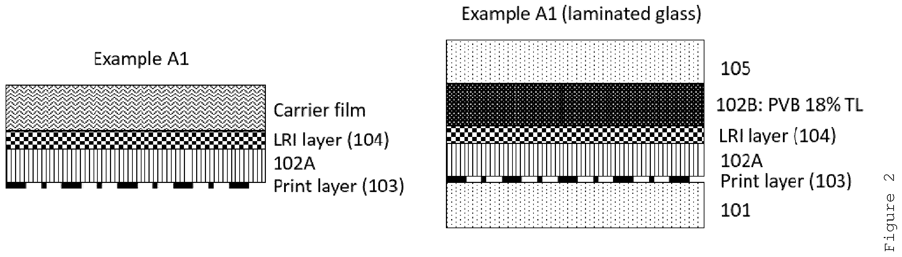

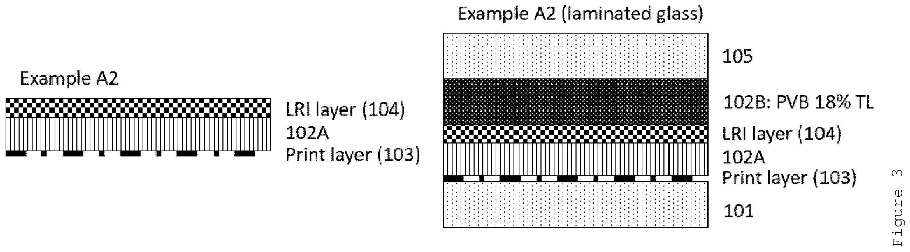

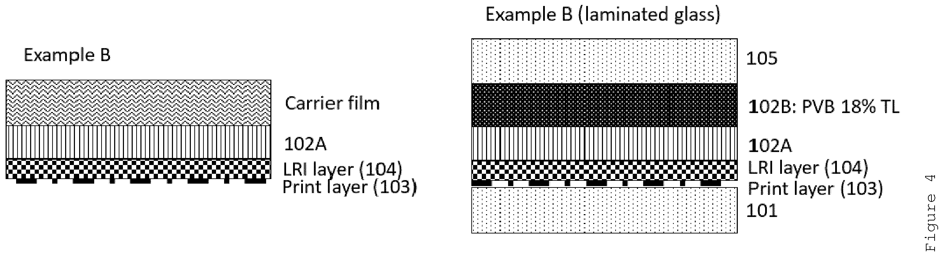

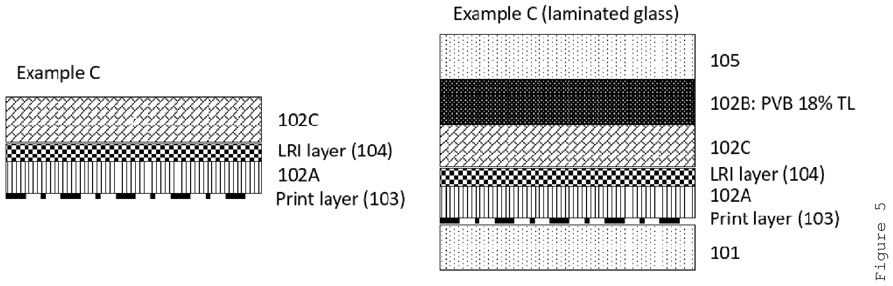

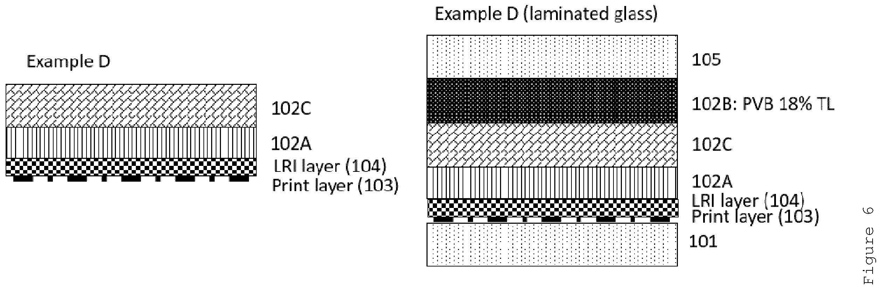

Figures 2 to 6 illustrate embodiments according to the present invention as exemplified in examples A1, A2, B, C, and D, respectively.

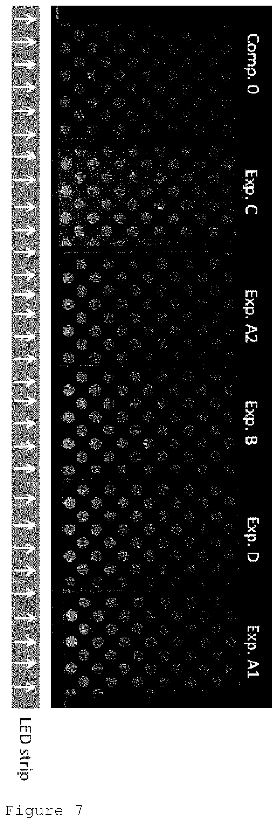

Fig 7 shows the improved outcoupling of light achieved with the examples according to the present invention compared to the comparative example 0.

The further polymer film C preferably comprises homo- or copolymers of (meth)acrylates, poly(vinyl) acetals, ionomers like ethylene methacrylic acid copolymers, nitro cellulose, polystyrenes, thermoplastic polyurethane, polycarbonates, polyvinyl chloride, cyclic olefine polymers and copolymers, polyvinyl alcohol, cellulose triacetate, polyethylene terephthalate, ethylene-vinyl acetate or mixtures thereof. More preferably, polymer film C comprises or consists of polyethylene terephthalate.

Polymer film C has preferable a thickness in a range between 10 - 1000 um, preferably 20 - 500 µm, more preferred 30 um - 200 um and most preferred 40 um - 150 um.

The light diffusing layer is typically applied to the at least one surface of the polyvinyl acetal film A (102A) by means of a coating or printing process. In case of printing, they can be applied via techniques that are commonly known in the printing industry such as offset printing, rotogravure printing, flexography, screen-printing and inkjet printing.

The thickness of the light diffusing layer is preferably 0.1 um to 100 µm, more preferably 1.0 um to 20 µm before lamination.

The light diffusing layer preferably comprises the light scattering particles and at least one matrix material. Suitable matrix materials include polymers in which the light scattering particles can be homogenously dispersed without decomposition. Preferably, the matrix material comprises homo- or copolymers of (meth)acrylate, methyl methacrylate, poly(vinyl) acetal, nitro cellulose, polystyrene, poly vinyl alcohol, polyurethane, poly carbonate and polyvinyl chloride. Most preferably, the matrix material is polyvinyl butyral.

Further components might be present in the light diffusing layer. Examples of further components include co-resins, solvents, UV absorber, UV-stabilizer, cross-linker, curing agents, accelerants, photo-initiators, surfactants, stabilizers, filler, thixotropic modifiers and plasticizers.

Light scattering materials known in the art can be employed. Preferably, the light scattering particles are chosen from the group consisting of TiO₂, ZnO, Al₂O₃, ZrO₂, PbSO₄, BaSO₄, CaCO₃, glass, polymers and mixtures thereof. The light scattering particles can be used as solid or hollow beads or fibres.

Preferably, the light scattering particles are present in the light diffusing layer in an amount of 0.1 to 10 % by weight, more preferred 0.5 to 5 % by weight, most preferably 1 to 2.5 % by weight.

Also preferably, the light scattering particles have a median particle size D50 by volume determined by the laser diffraction method according to DIN 13320 of equal to or more than 0.001, more preferably 0.01 um, 0.05 µm or 0.1 um. Also preferably they are equal to or less than 10.0 um, more preferably 5.0 µm and most preferably 1.0 um. Preferably, the median particle size by volume determined by the laser diffraction method according to DIN 13320 is equal to or more than 0.01 µm and equal to or less than 1.0 um.

Preferably, the light scattering particles are present in the light diffusing layer (103) in form of a concentration gradient, i.e. concentration of functional particles in the light diffusing layer (103) varies depending on the distance to the light source. More preferably, the concentration of light scattering particles in the light diffusing layer increases with an increasing distance to the nearest light source.

The low refractive index layer (104) may consist of any material with a refractive index < 1.40. As regular lamination interlayers have a similar refractive index in the order of 1.5 and thus similar to the typical soda lime glass sheets (101,105) these are not well suited as optical separation layer (104). Hence, the refractive index of the optical separation layer (104) must be significantly lower. The lower the refractive index of optical separation layer (104), the more efficient the light guiding and the lighting will be. Preferably the refractive index is < 1.36, more preferably < 1.32 and most preferably < 1.28.

Suitable materials include polymers and inorganic materials or composites thereof. Suitable examples are silicone derivatives with low refractive index coatings, for example as described in EP 3 323 864 A1 and the patents cited therein, in WO 2013/ 117334 A1 and patents cited therein and US 2006/0147724A1 for a fluorine containing based coating. Other layers can be based on polyfluorinated alkyl acrylate polymers. Other examples are polysiloxane resins, fluorinated acrylate resins, fluorinated epoxy resins, and/or fluorinated siloxanes. Layers can also be based on nano-particles with a low refractive index dispersed in a polymeric matrix.

The low refractive index layer may also consist of a nanoscale, porous material which incorporates low refractive index fluids in its pores.

Preferably, the low refractive index layer can be applied to a surface of either the polyvinyl acetal film A (102A) or the polymer film C (102C) via a wet coating step such as slot die coating, rake coating, curtain coating and the like. Alternatively, low refractive index layers can be applied to the surfaces by sputtering or chemical vapor deposition processes.

In the case of wet coatings, a polymeric binder can be used. To this end, polyvinyl alcohol and polyvinyl butyral are preferred due to their good film forming properties, high transparency and stability against light. Alternatively, the binder can be chosen from the following list: pyrrolidone, completely or partially saponified products of copolymers of vinyl acetate with other monomers; homopolymers or copolymers of unsaturated carboxylic acids such as maleic acid, (meth)acrylic acid or crotonic acid and the like; homopolymers or copolymers of sulfonated vinylmonomers such as vinylsulfonic acid, styrene sulfonic acid; homopolymers or copolymers of vinylmonomers of (meth)acrylamide; homopolymers or copolymers of other monomers with ethylene oxide; polyurethanes; polyacrylamides; water-soluble nylon type polymers; polyesters; polyvinyl lactams; acryl amide polymers; polymers of alkyl and sulphoalkyl acrylates and methacrylates; hydrolysed polyvinyl acetates; polyamides; polyvinyl pyridines; polyacrylic acid; copolymers with maleic anhydride; polyalkylene oxides; copolymers with methacrylamide and copolymers with maleic acid.

The low refractive index layers preferably have a thickness between 0.1 - 50 um, preferably 0.3 - 10 µm, more preferably 0.5 - 5 µm, even more preferably 1 - 3 µm and most preferably 1.5 - 2.5 um.

In one embodiment, the laminated glass according to the present invention is used as glazing in an automobile. Preferably, the second glass sheet (105) is facing the outside of the vehicle. Also preferably, the laminated glazing of the present invention is used for a sunroof. In that case, second glass sheet (105) may be tinted in order to reduce the solar energy which is transmitted through the laminate into the vehicle and thus may show increased absorption. Such highly light-absorptive sheets are particularly unsuited as optical waveguides.

Preferably, the light diffusing layer (103) covers only part of the polyvinyl acetal film A (102A). Thus, the light diffusing layer (103) can be applied in form of a pattern and illumination in form of certain pattern can be achieved, which is not possible in case the light scattering particles are evenly dispensed in the laminate. Thus, preferably, the light diffusing layer (103) covers equal to or less than 90%, 80%, 75% and most preferably less than 500 of the at least one surface of film A. This embodiment is especially useful for informative and/or decorative glazing for aircrafts, trains or ships and for use in the construction area, especially for shop windows, elevators or facade glazing.

The thickness of the light diffusing layer (103) is preferably from 0.1 to 50 µm, more preferably, from 1 to 30 µm, most preferably from 2 to 20 µm as measured by IR microscopy.

In the present invention optically transparent means completely optically transparent as well as semi-transparent. Hence, optically transparent means that at least 40% of the initial light passes through the device comprising layer (103), even more preferred is 50 to 100%, and even more preferred is 80 to 100%.

The transparency (light transmission) is determined as light transmission TL (380 to 780 nm) based on DIN EN 410 on a test laminate using two standard panes of clear glass.

For the avoidance of doubt, the light transmission is measured in an area of the test laminate which comprises the light diffusing layer (103) and is compared to an area which does not comprise the functional layer (in the same laminate or, if the light diffusing layer (103) completely covers the surface of the film A(102A), on a test laminate prepared without the light diffusing layer (103) using the same type of film).

Also preferably, the polymer interlayer film A (102A) comprises polyvinyl butyral and a plasticizer, wherein the content of plasticizer in the polymer interlayer film A (102A) before lamination is equal to or less than 200. More preferably less than 150, more preferably less than 100 or 5% and more preferably less than 0.50 or more preferably, the polymer interlayer film is free of any added plasticizer.

The term "before lamination" shall denote the state of the film before it is brought into contact with any of the other components of the present laminated glazing.

In case of polyvinyl butyral, the films are generally produced by extrusion with use of a cast-film line or in the form of a blown film. Also preferably, film A is produced in a solvent-casting process.

However, regular lamination interlayers made from polyvinyl butyral typically have a rougher surface to ensure proper de-airing during the lamination process. The roughness of such films typically ranges from an Rz value of 20 to 80 um. Thus, the other surface of the polymer interlayer film may have roughness as of 0.1 to 50 um, preferably 1 to 20 µm, more preferably 5 to 10 um.

Preferably, the polymer interlayer film A (102A) has a thickness of equal to or more than 10 µm to equal to or less than 250 µm before lamination, more preferably 20 to 160 um, most preferably 30
to 120 um, also preferably 40 to 100 um and at specifically 50 to 80 um. This range of thickness does not include additional coating on the film. It is especially preferred for these thin polymer interlayer films to have the low or no content of plasticizer or even no plasticizer as described earlier to avoid sticking issues and to exhibit the required rigidity to print on and handle such thin films.

In another embodiment according to the present invention, the laminated glazing comprises, in that order,
- a polyvinyl acetal film B (102B) comprising plasticizer, before lamination, in an amount of from 15 to 50 % by weight,
- a low refractive index layer (104) having a refractive index of < 1.40,
- a polyvinyl acetal film A (102A) comprising plasticizer, before lamination, in an amount of from 0 to 20 % by weight,
- a light diffusing layer (103) in direct contact to one of the glass sheets (101,105).

In yet another embodiment according to the present invention, the laminated glazing comprises, in that order,
- a polyvinyl acetal film B (102B) comprising plasticizer, before lamination, in an amount of from 15 to 50 % by weight,
- a polyvinyl acetal film A (102A) comprising plasticizer, before lamination, in an amount of from 0 to 20 % by weight,
- a low refractive index layer (104) having a refractive index of < 1.40, and
- a light diffusing layer (103) in direct contact to one of the glass sheets (101,105).

In yet another embodiment according to the present invention, the laminated glazing comprises, in that order,
- a polyvinyl acetal film B (102B) comprising plasticizer, before lamination, in an amount of from 15 to 50 % by weight,
- a further polymer film C (102C),
- a low refractive index layer (104) having a refractive index of < 1.40,
- a polyvinyl acetal film A (102A) comprising plasticizer, before lamination, in an amount of from 0 to 20 % by weight, and
- a light diffusing layer (103) in direct contact to one of the glass sheets (101,105).

In yet another embodiment according to the present invention, the laminated glazing comprises, in that order,
- a polyvinyl acetal film B (102B) comprising plasticizer, before lamination, in an amount of from 15 to 50 % by weight,
- a further polymer film C (102C),
- a polyvinyl acetal film A (102A) comprising plasticizer, before lamination, in an amount of from 0 to 20 % by weight,
- a low refractive index layer (104) having a refractive index of < 1.40, and
- a light diffusing layer (103) in direct contact to one of the glass sheets (101,105).

Specifically, the further polymer interlayer film B (102B) comprises polyvinyl butyral. Preferably, at least one surface of the further polymer interlayer film B (102B) has a roughness Rz of 20 to 80 µm, more preferably, 25 to 70 µm, and most preferably 30 to 60 µm before lamination measured in accordance with EN ISO 4287. Also preferably, the other surface has a roughness Rz of 20 to 80 µm, more preferably, 25 to 70 µm, and most preferably 30 to 60 um before lamination measured in accordance with EN ISO 4287.

Further polymer interlayer film B (102B) may be any plasticized PVB film known in the art, i.e. it may contain a single plasticiser as well as mixtures of plasticisers, before lamination, at least 22 % by weight, such as 22.0 to 45.0 % by weight, preferably 25.0 to 32.0 % by weight and in particular 26.0 - 30.0 % by weight plasticiser(s).

Polymer interlayer film B (102B) may be clear with a light transmission TL between clear glass of > 700 or tinted with a light transmission of < 500, < 400, < 300, < 200, < 10% or even down to < 5% while preferred tint colors are grey, blue, brown or bronze.

Suitable plasticizers include one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids;
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Particularly preferred are 1,2-cyclohexane dicarboxylic acid diisononyl ester (DINCH) or triethylene glycol-bis-2-ethyl hexanoate (3GO or 3G8).

In addition, the polyvinyl acetal films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

The thickness of the film B (102B) before lamination is preferably 250 to 2500 um, more preferably 300 to 1600 um, more preferably 380 - 1200 µm and most preferably 600 to 900 um.

Preferably, low refractive index layers can be applied to a surface of either polyvinyl acetal film A (102A) or polymer film C (102C) via a wet coating step such as slot die coating, rake coating, curtain coating and the like. Alternatively, low refractive index layers can be applied to above surfaces by a sputtering, chemical vapor deposition processes and the like. In the case of wet coatings, a polymeric binder can be used. To this end, polyvinyl alcohol and polyvinyl butyral are preferred due to their good film forming properties, high transparency and stability against light. Alternatively, acryclic or polyurethane based binders may be used as well.

Any transparent, low haze low refractive index layer can be used. Suitable examples for silicone based low refractive index coatings can be found in EP 3 323 864 A1 and the patents cited therein, in WO 2013/117334A1 and patents cited therein and US 2006/0147724A1 for a fluorine containing coating. Other layers can be based on polyfluorinated alkyl acrylate polymers,(poly) siloxane resins, , fluorinated epoxy resins or fluorinated siloxanes. Layers can also be based on nano-particles with low refractive index dispersed in a polymeric matrix.

Low refractive index layers can have a thickness between 0.1 - 50 um, preferably 0.3 - 10 µm, more preferably 0.5 - 5 µm, even more preferably 1 - 3 µm and most preferably 1.5 - 2.5 um.

Inherent part of the final application is the light source which provides the light which is coupled into the laminate via an optical connector. The optical connector, which is a transparent, optically clear material with low light absorption, may form a permanent bond between the light source and the laminate, e.g. by means of physical and/or chemical curing, optical clear adhesive. Alternatively, by a positive-fit or force-fit connection. The latter options allows for an improved maintainability, e.g. change of the light source. Materials which are suited for positive-fit or force-fit materials are optically clear polymers, especially elastomers. The light source may be any conventional light source, preferably it is an LED light source.

A second aspect of the present invention is a process for the production of a laminated glazing as described above XXX

The glass sheets (101,105) and the various interlayer films can be laminated by any known lamination technique known in the art.

### Examples

### Comparative example 0 of the prior art

An A4 size sheet of 75 µm matte PET with high roughness (Hostaphan^{®} MT) was coated with a 10% by weight solution of Mowital^{®} F5 in Ethanol (polyvinyl butyral having a PVOH 19.3 w-%, a residual acetate content of 1.0 w-% and a viscosity of 80 mPas for its 5% ethanolic solution) to give a dry thickness of 28 um. The surface roughness of the PVB top-layer was measured to be < 1 µm Rz.

The coated side of the sheet was then ink-jet printed with UV curable ink with 12% TiO2 content to obtain a faint white array of dots, the dots having a diameter of 7.5 mm and a center-to-center distance of 18 mm.

The matte PET carrier was carefully peeled away to obtain the free-standing PVB with the print on its PVB surface. The bottom side had a Rz roughness of 3.2 um.

The printed thin PVB was assembled with grey PVB in 0.76 mm with 18% visible light transmission (Trosifol^{®} V705 Charcoal Grey 180 from Kuraray) between two plies of 2 mm clear float glass (Optifloat^{™}) and a laminated glass with the following configuration was produced: glass / 0.76 mm PVB 180 / 28um PVB layer - print / glass

### Example A1) low refractive index coating on backside of film A

An A4 size sheet of 75 µm matte PET with high roughness (Hostaphan^{®} MT) was coated with the help of a Meyer bar in a wet thickness of 25 µm with a composition according to the control compositions of example 3 of EP 3 323 864 A1 employing a SiO2-NP/PVA ratio of 1.5:1. After drying, the thickness of the obtained coating was 1.8 µm and its refractive index was measured 1.353. The coated side was then coated with a 10% by weight solution of Mowital^{®} F5 in Ethanol (polyvinyl butyral having a PVOH 19.3 w-%, a residual acetate content of 1.0 w-% and a viscosity of 80 mPas for its 5% ethanolic solution) to give a dry thickness of 28 um. The surface roughness of the PVB top-layer was measured to be < 1 µm Rz.

The coated side of the sheet was then ink-jet printed with UV curable ink with 12% TiO2 content to obtain a faint white array of dots, the dots having a diameter of 7.5 mm and a center-to-center distance of 18 mm.

The matte PET carrier was carefully peeled away to obtain the thin free-standing PVB / LRI bi-layer with the print on its PVB surface. The LRI side had a Rz roughness of 3.5 um.

The bi-layer was assembled with grey PVB in 0.76 mm with 180 visible light transmission (Trosifol^{®} V705 Charcoal Grey 18% from Kuraray) between two plies of 2 mm clear float glass (Optifloat^{™}) and a laminated glass with the following configuration was produced: glass / 0.76 mm PVB 180 / 1.8µm LRI layer - 28um PVB layer - print / glass

### Example A2) low refractive index coating on backside of film A

An A4 size sheet of 50 µm of plasticizer free PVB (Mowital^{®} LP BF 75) was coated with the help of a Meyer bar in a wet thickness of 25 µm with a composition according to the control compositions of example 3 of EP 3 323 864 A1 employing a SiO2-NP/PVA ratio of 1.5:1. After drying, the thickness of the obtained coating was 1.5 µm and its refractive index was measured 1.350.

The un-coated side of the sheet was then ink-jet printed with UV curable ink with 12% TiO2 content to obtain a faint white array of dots, the dots having a diameter of 7.5 mm and a center-to-center distance of 18 mm.

The sheet was assembled with grey PVB in 0.76 mm with 18% visible light transmission (Trosifol^{®} V705 Charcoal Grey 18% from Kuraray) between two plies of 2 mm clear float glass (Optifloat^{™}) and a laminated glass with the following configuration was produced: glass / 0.76 mm PVB 180 / 1.5µm LRI layer - 50um PVB layer - print / glass

### Example B) low refractive index coating on top-side of TF layer underneath the print

An A4 size sheet of 75 µm matte PET with high roughness (Hostaphan^{®} MT) was coated with a 10% by weight solution of Mowital^{®} F5 in Ethanol (polyvinyl butyral having a PVOH 19.3 w-%, a residual acetate content of 1.0 w-% and a viscosity of 80 mPas for its 5% ethanolic solution) to give a dry thickness of 25 um. The surface roughness of the PVB was measured to be < 1 um Rz.

The dried PVB layer was coated with the help of a Meyer bar for a wet thickness of 25 µm with a composition according to example 3 of EP 3 323 864 A1 employing a SiO2-NP/PVA ratio of 2:1. The composition included TEOS (tetra ethoxy silane). After drying, the thickness of the obtained coating was 2.3 µm and its refractive index was measured 1.344.

The coated side of the sheet was then ink-jet printed with UV curable ink with 12% TiO2 content to obtain a faint white array of dots, the dots having a diameter of 7.5 mm and a center-to-center distance of 18 mm.

The matte PET carrier was carefully peeled away to obtain the thin free-standing PVB / LRI bi-layer with the print on its LRI coated surface. The PVB bottom side had a Rz roughness of 3.0 um. The bi-layer was assembled with grey PVB in 0.76 mm with 180 visible light transmission (Trosifol^{®} V705 Charcoal Grey 18% from Kuraray) between two plies of 2 mm clear float glass (Optifloat^{™}) and a laminated glass with the following configuration was produced: glass / 0.76 mm PVB 180 / 25um PVB layer - 2.3um LRI layer - print / glass

### Example C) low refractive index coating on backside of TF layer, transparent polymer layer in laminate

An A4 size sheet of 50 um extra clear, surface treated PET (Hostaphan^{®} GN 4600A) was coated with the help of a Meyer bar for a wet thickness of 25 µm with a composition according to example 3 of EP 3 323 864 A1 employing a SiO2-NP/PVA ratio of 2:1. This composition includes TEOS (tetra ethoxy silane) for cross linking of the LRI coating layer and improved adhesion on polymeric substrates. After drying, the thickness of the obtained coating was 1.6 µm and its refractive index was measured 1.328.

The coated side was then coated with a 10% by weight solution of Mowital^{®} F5 in Ethanol (polyvinyl butyral having a PVOH 19.3 w-%, a residual acetate content of 1.0 w-% and a viscosity of 80 mPas for its 5% ethanolic solution) to give a dry thickness of 27 um. The surface roughness of the PVB top-layer was measured to be < 1 µm Rz.

The coated side of the sheet was then ink-jet printed with UV curable ink with 12% TiO2 content to obtain a faint white array of dots, the dots having a diameter of 7.5 mm and a center-to-center distance of 18 mm.

The bi-layer on clear PET was assembled with grey PVB in 0.76 mm with 18% visible light transmission (Trosifol^{®} V705 Charcoal Grey 18% from Kuraray) between two plies of 2 mm clear float glass (Optifloat^{™}) and a laminated glass with the following configuration was produced: glass / 0.76 mm PVB 180 / PET - 1.6pm LRI layer - 27um PVB layer - print / glass

### Example D) low refractive index coating on top-side of TF layer underneath the print, transparent polymer layer in laminate

An A4 size sheet of 50 um extra clear, surface treated PET (Hostaphan^{®} GN 4600A) was coated with the help of a Meyer bar with a 10% by weight solution of Mowital^{®} F5 in Ethanol (polyvinyl butyral having a PVOH 19.3 w-%, a residual acetate content of 1.0 w-% and a viscosity of 80 mPas for its 5% ethanolic solution) to give a dry thickness of 30 um. A coating composition in a wet thickness of 25 µm according to example 3 of EP 3 323 864 A1 employing a SiO2-NP/PVA ratio of 2:1. The composition included TEOS (tetra ethoxy silane) for cross linking of the LRI coating layer and improved adhesion to glass surface. After drying, the thickness of the obtained coating was 1.7 µm and its refractive index was measured 1.337.

The coated side of the sheet was then ink-jet printed with UV curable ink with 12% TiO2 content to obtain a faint white array of dots, the dots having a diameter of 7.5 mm and a center-to-center distance of 18 mm.

The bi-layer on clear PET was assembled with grey PVB in 0.76 mm with 18% visible light transmission (Trosifol^{®} V705 Charcoal Grey 18% from Kuraray) between two plies of 2 mm clear float glass (Optifloat^{™}) and a laminated glass with the following configuration was produced: glass / 0.76 mm PVB 180 / PET - 30um PVB layer - 1.7µm LRI layer -- print / glass

### Measurement of Visible Light Transmission and Haze

Visible light transmission TL and Haze were measured according to ISO 9050 and ASTM D1003. The results indicate that despite the good light diffusing properties, the light diffusing print on a thin PVB only slightly reduces TL and only slightly increases visible haze

### Measurement of refractive index

Refractive index of the dried / cured low refractive index layer were measured with the help of a Metricon Model 2010/M Prism Coupler(using standard He-Ne laser) at 20°C in an environment with 30% RH

### Measurement of brightness enhancing effect

10 cm wide x 17 cm long rectangles were cut from the laminated glasses of the examples. The edges of the laminate rectangles were inserted side by side into a hollow rail in which a LED strip was mounted (COB-LED strip 24V WHITE; 6500K; Luminance 1100 lm/m) and stabilized by a second empty rail into a horizontal position, the print containing side of each laminate facing upwards to the camera. Without touching it, samples were suspended over a deep black non-reflective foil to provide a dark background. The room was darkened, and an image was taken with a digital camera (Sony Alpha II with settings ISO 100; aperture F/8; exposure time; 1/100 s from a distance of 55 cm. Exposure time may be adjusted to compensate for e.g., mounting details, LED strength, with the goal of differentiating sample brightness).

**Result:** By visual comparison of brightness of the printed pattern, it becomes obvious that examples according to the invention are superior in brightness over the comparative sample.

## Claims

1. Laminated glazing comprising two sheets of glass (101,105) combined by means of a thermoplastic interlayer comprising:
- a polyvinyl acetal film A (102A) comprising plasticizer before lamination in an amount of from 0 to 20 % by weight,
- a low refractive index layer (104) having a refractive index of < 1.40 measured as described in the description,
- a light diffusing layer (103) in direct contact to one of the glass sheets (101,105),
- a polyvinyl acetal film B (102B) comprising plasticizer before lamination in an amount of from 15 to 50 % by weight, and
- optionally at least one further polymer film C (102C).

2. The laminated glazing according to claim 1 wherein the low refractive index layer (104) comprises a silicon derivative and a binder.

3. The laminated glazing according to claim 2 wherein the binder is polyvinyl alcohol, polyvinyl butyral, polyurethane or an acrylic polymer.

4. The laminated glazing according to any one of the claims above wherein the light diffusing layer (103) comprises light scattering particles chosen from the group consisting of TiO₂, ZnO, Al₂O₃, ZrO₂, PbSO₄, BaSO₄, CaCO₃, glass, and polymers and a binder.

5. The laminated glazing according to any one of the 4 wherein the binder is polyvinyl butyral.

6. The laminated glazing according to any one of the claims above comprising a further polymer film C (102C) comprising polyethylene terephthalate.

7. The laminated glazing according to any one of the claims above wherein the thermoplastic interlayer comprises, in that order,
- a polyvinyl acetal film B (102B) comprising plasticizer, before lamination, in an amount of from 15 to 50 % by weight,
- a low refractive index layer (104) having a refractive index of < 1.40,
- a polyvinyl acetal film A (102A) comprising plasticizer, before lamination, in an amount of from 0 to 20 % by weight,
- a light diffusing layer (103) in direct contact to one of the glass sheets (101,105).

8. The laminated glazing according to any one of the claim 1 to 6 wherein the thermoplastic interlayer comprises, in that order,
- a polyvinyl acetal film B (102B) comprising plasticizer, before lamination, in an amount of from 15 to 50 % by weight,
- a polyvinyl acetal film A (102A) comprising plasticizer, before lamination, in an amount of from 0 to 20 % by weight,
- a low refractive index layer (104) having a refractive index of < 1.40, and
- a light diffusing layer (103) in direct contact to one of the glass sheets (101,105).

9. The laminated glazing according to any one of the claim 1 to 6 wherein the thermoplastic interlayer comprises, in that order,
- a polyvinyl acetal film B (102B) comprising plasticizer, before lamination, in an amount of from 15 to 50 % by weight,
- a further polymer film C (102C),
- a low refractive index layer (104) having a refractive index of < 1.40,
- a polyvinyl acetal film A (102A) comprising plasticizer, before lamination, in an amount of from 0 to 20 % by weight, and
- a light diffusing layer (103) in direct contact to one of the glass sheets (101,105).

10. The laminated glazing according to any one of the claim 1 to 6 wherein the thermoplastic interlayer comprises, in that order,
- a polyvinyl acetal film B (102B) comprising plasticizer, before lamination, in an amount of from 15 to 50 % by weight,
- a further polymer film C (102C),
- a polyvinyl acetal film A (102A) comprising plasticizer, before lamination, in an amount of from 0 to 20 % by weight,
- a low refractive index layer (104) having a refractive index of < 1.40, and
- a light diffusing layer (103) in direct contact to one of the glass sheets (101,105).

11. The laminated glazing according to any one of the claims above wherein the polyvinyl acetal film B (102B) has a light transmission of visible light measure according to the method described in the description of equal to or less than 500.

12. The laminated glazing according to any one of the claims above further comprising a light source (106) and an optical connector (107).

13. A process for the production of the laminated glazing according to any one of the claims 1 to 12.
